# FASCICULE DE BREVET EUROPEEN

(11) **EP 3 350 123 B1**
(45) Date de publication et mention de la délivrance du brevet: **29.05.2019**
(21) Numéro de dépôt: 16781836.8
(22) Date de dépôt: 16.09.2016
(51) Int. Cl.: C01B 35/14

(54) **PROCEDE D'OBTENTION DU BORAZANE**
VERFAHREN ZUR HERSTELLUNG VON BORAZAN
METHOD FOR PRODUCING BORAZANE

(30) Priorité: 18.09.2015 FR 1558803
(43) Date de publication de la demande: 25.07.2018
(73) Titulaire: ARIANEGROUP SAS, 75015 Paris (FR)
(72) Inventeur: VANDECANDELAERE, Nicolas, 91750 Champcueil (FR); COMTE, Sébastien, 77176 Savigny le Temple (FR)
(74) Mandataire: Cabinet Beau de Loménie
(86) Numéro de dépôt international: PCT/FR2016/052349
(87) Numéro de publication internationale: WO 2017/046540

(56) Documents cités:
- WO-A2-2007/120511
- FR-A1- 3 021 317
- US-A1- 2010 272 623
- P. VEERARAGHAVAN RAMACHANDRAN ET AL: "Ammonia-mediated, large-scale synthesis of ammonia borane", DALTON TRANSACTIONS, vol. 43, no. 44, 16 septembre 2014 (2014-09-16), pages 16580-16583, XP055162982, ISSN: 1477-9226, DOI: 10.1039/C4DT02467B
- LIANG GAO ET AL: "Liquefaction of Solid-State BH 3 NH 3 by Gaseous NH 3", INORGANIC CHEMISTRY, vol. 50, no. 10, 16 mai 2011 (2011-05-16), pages 4301-4306, XP055294005, EASTON, US ISSN: 0020-1669, DOI: 10.1021/ic200373g

## Description

La présente invention a pour objet un procédé d'obtention du borazane ou ammonia borane de formule chimique NH₃BH₃. Ce procédé est particulièrement intéressant.

L'obtention du borazane est une clé pour la réussite des programmes de génération d'hydrogène à partir de composés solides. Cette génération d'hydrogène à partir de composés solides est actuellement l'un des moyens proposés pour alimenter les piles à combustible. Dans ce contexte, l'utilisation du borazane (ou ammonia borane) en tant que précurseur solide pour la production d'hydrogène est d'ores et déjà connue.

En fait, le complexe borazane ou ammonia borane, de formule chimique NH₃BH₃, qui existe sous la forme d'une poudre cristalline blanche, présente le potentiel unique de contenir 19,6 % en masse d'hydrogène. Il est ainsi positionné comme un candidat particulièrement intéressant pour le stockage solide de l'hydrogène.

A ce jour, à la connaissance des inventeurs, il n'a toutefois pas encore été proposé de procédé d'obtention du borazane, adapté à la fabrication de celui-ci à l'échelle industrielle. Diverses approches ont pourtant été étudiées, voire développées.

Une voie de synthèse du borazane basée sur un déplacement entre un borane (R.BH₃) et une amine, typiquement l'ammoniac, a largement été décrite, notamment par X. Chen et al dans Chem. Eur. J., 2012, 18, 11994-11999.

La voie de synthèse du borazane, la plus courante et la plus mature à ce jour, est celle basée sur une réaction de métathèse (de sels) : la réaction d'au moins un sel d'ammonium (généralement choisi parmi le chlorure d'ammonium, le sulfate d'ammonium, le carbonate d'ammonium, le formiate d'ammonium et leurs mélanges) avec au moins un borohydrure de métal alcalin et/ou alcalino-terreux (généralement choisi parmi le borohydrure de lithium, le borohydrure de sodium et les mélanges de ceux-ci), dans un solvant, favorablement le tétrahydrofurane (THF). Cette voie de synthèse est largement et depuis longtemps (voir S. G. Shore et R. W. Parry, J. Am. Chem. Soc., 1955, 77, p. 6084-6085) décrite dans la littérature (voir aussi A.K. Figen et al., Int. J. Hydrogen Energ., 38 (2013), 16215-16228). La réaction est généralement effectuée entre un tel sel d'ammonium et un tel borohydrure. Le procédé le plus couramment utilisé consiste à faire réagir le carbonate d'ammonium (NH₄)₂CO₃ avec le borohydrure de sodium NaBH₄, dans du THF. La réaction en cause est schématisée ci-dessous :

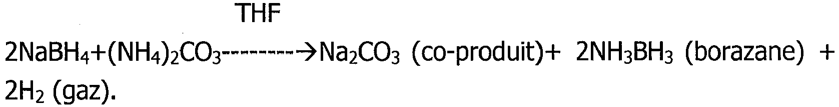

Le NH₃BH₃ formé est soluble dans ledit THF. Il est séparé du carbonate de sodium (co-produit) formé lui aussi, qui précipite. En fait, à la fin de la réaction, la solution de THF (contenant donc le NH₃BH₃ en solution) est filtrée pour en éliminer la plus grande partie des matières solides en suspension. Le solvant THF est ensuite évaporé. Une poudre est enfin récupérée qui contient essentiellement le complexe recherché (ammonia borane). Ces procédés conventionnels de synthèse du borazane requièrent donc l'utilisation d'un solvant, THF ou équivalent, ce qui pose un réel problème, en termes de risques pour la santé humaine et pour l'environnement. Ces risques sont évidemment exacerbés dans un contexte d'exploitation à l'échelle industrielle. Par ailleurs ledit solvant doit être très anhydre, afin d'éviter la production de sous-produits, tout particulièrement celle d'oxydes de bore. En tout état de cause, la réaction de métathèse est mise en oeuvre dans des milieux relativement peu concentrés, du fait de la relativement faible solubilité des réactifs dans le solvant (type THF). Ceci constitue un réel obstacle à l'obtention de productivités de synthèse importantes (productivité de synthèse = quantité de borazane produit par quantité de solvant utilisé pour l'opération de synthèse).

Des variantes aux procédés conventionnels basés sur une réaction de métathèse mises en oeuvre dans le THF ou équivalent ont été proposées ; lesdites variantes utilisant l'ammoniac liquide comme co-solvant ou comme solvant. Selon l'enseignement de la demande de brevet US 2010/272623 (voir tout particulièrement son exemple 2), la réaction entre le borohydrure de sodium et le chlorure d'ammonium est mise en oeuvre dans un mélange ammoniac liquide/THF (solvant). Selon l'enseignement de la publication, intitulée « Ammonia-mediated, large-scale synthesis of ammonia borane » dans DALTON TRANSITIONS, 2014, vol. 43, pages 16580-16583, la réaction entre le borohydrure de sodium et le sulfate d'ammonium est mise en oeuvre dans du THF en présence d'ammoniac liquide (5 %). Selon l'enseignement du brevet US 7,897,129, l'ammoniac liquide est utilisé comme solvant. L'utilisation d'ammoniac liquide alourdit assurément la mise en oeuvre des procédés en cause, l'homme du métier n'ignorant pas que pour disposer d'ammoniac sous forme liquide, il convient d'opérer à basse température (en deçà de - 33°C) ou sous pression (7-8 bars).

Dans un tel contexte, il est du mérite des inventeurs de proposer présentement une mise en oeuvre originale de la synthèse du borazane basée sur une réaction de métathèse (réaction d'au moins un borohydrure choisi parmi les borohydrures de métal alcalin et les borohydrures de métal alcalino-terreux avec au moins un sel d'ammonium). Ladite mise en oeuvre, originale et particulièrement intéressante (voir ci-après), repose sur le phénomène ci-après, visualisé par les inventeurs : la liquéfaction des borohydrures (solides réactifs de la réaction de métathèse, tels qu'identifiés ci-dessus) et celle du borazane (solide) en présence d'ammoniac gazeux (la liquéfaction desdits borohydrures et dudit borazane par ledit d'ammoniac gazeux) et ce, notamment à des température et pression qui n'ont rien à voir avec les température ou pression requises pour travailler avec de l'ammoniac liquide (voir ci-dessus). On doit plus exactement parler d'une co-liquéfaction des borohydrures (solides) et de l'ammoniac (gazeux) ainsi que d'une co-liquéfaction du borazane (solide) et de l'ammoniac (gazeux). Des interactions physico-chimiques, analogues à celles qui se développent lors de la solubilisation du borazane dans l'ammoniac liquide (à une température inférieure ou égale à -33°C ou à une pression supérieure ou égale à 7-8 bars ; l'homme du métier connait le diagramme liquide-vapeur de l'ammoniac), expliquent vraisemblablement ces co-liquéfactions.

Ces co-liquéfactions :
- des borohydrures (solides) et de l'ammoniac gazeux, d'une part, et
- du borazane (solide) et de l'ammoniac gazeux, d'autre part, ont donc été observées par les inventeurs : une phase liquide est générée par mise en contact d'au moins un borohydrure (tels qu'identifié ci-dessus) avec de l'ammoniac gazeux (les inventeurs ont notamment observé qu'un flux d'ammoniac gazeux, à très faible débit, dirigé sur 2 g de poudre de NaBH₄ provoquait la déliquescence de la poudre puis sa liquéfaction (0,7 g d'ammoniac gazeux ayant alors été consommé)) et de la même façon une phase liquide est générée par mise en contact du borazane avec de l'ammoniac gazeux (les inventeurs ont observé de la même façon qu'un flux d'ammoniac gazeux, à très faible débit, dirigé sur 2 g de poudre de NH₃BH₃ provoquait la déliquescence de la poudre puis sa liquéfaction (0,7 g d'ammoniac gazeux ayant alors été consommé)).

Lors de la mise en oeuvre selon l'invention de la réaction de métathèse, ces co-liquéfactions se déroulent « successivement », de sorte que le au moins un réactif borohydrure est co-liquéfié (avec de l'ammoniac gazeux) et que le borazane formé (au fur et à mesure de sa formation) est aussi co-liquéfié (avec de l'ammoniac gazeux) (voir l'exemple ci-après).

Les co-liquéfactions en cause sont sélectives dans la mesure où les sels d'ammonium (autres solides réactifs de la réaction de métathèse) ne se liquéfient pas en présence d'ammoniac gazeux (les inventeurs ont confirmé ce fait en procédant notamment comme précisé ci-dessus avec 2 g de (NH₄)₂CO₃... et aussi 2 g de Na₂CO₃ (co-produit)).

Ces phénomènes de co-liquéfaction et l'exploitation desdits phénomènes dans le cadre d'un procédé d'obtention du borazane basé sur une réaction de métathèse sont donc particulièrement intéressants en ce qu'ils dispensent de toutes conditions opératoires lourdes de liquéfaction de l'ammoniac et permettent aussi d'opérer sans utiliser de solvant organique (voir ci-après).

La présente invention a pour objet un procédé d'obtention du borazane, comprenant la synthèse dudit borazane par réaction d'au moins un sel d'ammonium avec au moins un borohydrure, ledit au moins un borohydrure étant choisi parmi les borohydrures de métal alcalin et les borohydrures de métal alcalino-terreux. En cela, ledit procédé est basé sur une réaction de métathèse.

De façon caractéristique, ladite réaction (de métathèse) est mise en oeuvre sous balayage d'ammoniac gazeux (= sous atmosphère d'ammoniac gazeux permanente) ; de l'ammoniac gazeux étant co-liquéfié avec ledit au moins un borohydrure et, au fur et à mesure de sa synthèse, avec le borazane.

Dans le cadre de la mise en oeuvre d'une réaction de métathèse, la présence de l'ammoniac gazeux - présence permanente, du fait du balayage, obtenue sans mise en pression du volume réactionnel et qui permet l'obtention de rendements de la réaction de métathèse élevés (voir les 70 % de l'exemple) - est tout à fait originale.

Ledit ammoniac gazeux assure la liquéfaction du au moins un borohydrure (réactif solide) (par co-liquéfaction avec ledit au moins un borohydrure)... puis celle du borazane synthétisé (par co-liquéfaction avec ledit borazane synthétisé).

On peut d'ores et déjà noter ici que, selon une variante (variante A : voir ci-après), l'ammoniac gazeux peut être mis au contact d'un mélange d'au moins un borohydrure et d'au moins un sel d'ammonium préalablement constitué et que selon une autre variante (variante B : voir ci-après), il peut être mis au contact d'au moins un borohydrure, le au moins un sel d'ammonium étant ensuite ajouté dans le liquide résultant (de la co-liquéfaction).

La réaction se déroule dans un milieu hétérogène (solide/liquide), très chargé en solides (solides = initialement le au moins un sel d'ammonium puis de moins en moins dudit sel qui est consommé et de plus en plus du(des) co-produit(s) généré(s)). Au fur et à mesure de l'avancement de ladite réaction (réaction de métathèse), la phase liquide du milieu réactionnel s'appauvrit en le au moins un borohydrure (co-liquéfié) qui est consommé et s'enrichit en le borazane qui est synthétisé et co-liquéfié (tandis que la phase solide dudit milieu réactionnel s'appauvrit donc en ledit au moins un sel d'ammonium et s'enrichit donc en le(s) co-produit(s) de la réaction).

On se propose de schématiser successivement ci-après les variantes A et B ci-dessus de mise en oeuvre de la réaction de métathèse du procédé de l'invention dans l'hypothèse où le au moins un sel d'ammonium consiste en le carbonate d'ammonium ((NH₄)₂CO₃) et où le au moins un borohydrure consiste en le borohydrure de sodium (NaBH₄).

La variante A de mise en oeuvre de la réaction de métathèse du procédé de l'invention peut donc être schématisée comme suit :

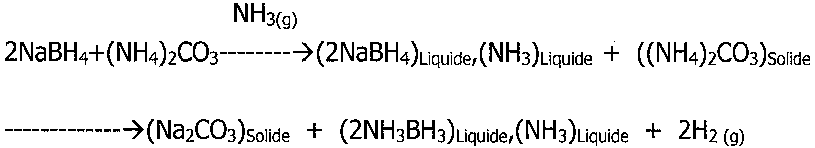

La variante B de mise en oeuvre de la réaction de métathèse du procédé l'invention peut donc être schématisée comme suit :

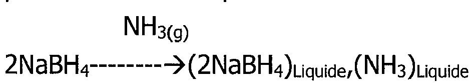

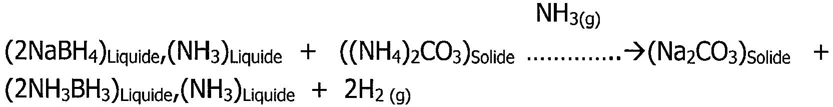

A la considération des schémas réactionnels ci-dessus, on réalise que l'ammoniac gazeux n'intervient pas dans la réaction de métathèse mise en oeuvre selon l'invention. Il n'intervient que dans des « réactions » de co-liquéfaction solide/gaz.

L'homme du métier a d'ores et déjà saisi le grand intérêt du procédé de l'invention comprenant la synthèse du borazane (réaction de métathèse) mise en oeuvre sous balayage d'ammoniac gazeux. Il n'est ainsi pas requis, pour cette synthèse, de travailler en pression ou à basse température . Cette synthèse peut tout à fait être mise en oeuvre à la pression atmosphérique et à la température ambiante (i.e. à une température (T) comprise entre 18 et 25°C (18°C ≤ T ≤ 25°C)). En fait, on prévoit plus généralement une mise en oeuvre :
- à une pression (p) comprise entre 1. 10⁵ Pa et 2. 10⁵ Pa (1 atm ≤ p ≤ 2 atm) (il ne saurait être totalement exclu du cadre de l'invention de mener la réaction sous une faible pression (notamment pour accélérer la réaction)), avantageusement à la pression atmosphérique, et
- à une température (T) comprise entre -5°C et 25°C (-5°C ≤ T ≤ 25°C) (du fait de l'exothermicité de la réaction, il peut être opportun de mener la réaction en deçà de la température ambiante).

On doit aussi insister sur le fait que la conduite, selon l'invention, de la réaction de métathèse sous atmosphère (permanente) d'ammoniac gazeux, dispense de l'utilisation d'un quelconque solvant organique (tel le THF par exemple (voir ci-dessus)). Ceci est particulièrement avantageux, en référence à ladite conduite de la réaction (sans utilisation de solvant) mais aussi à la récupération ultérieure du borazane synthétisé (sans solvant à éliminer). Ainsi le procédé de l'invention est-il généralement (*a priori* toujours) mis en oeuvre en l'absence de solvant organique. On ne saurait toutefois totalement exclure du cadre de l'invention l'intervention d'un tel solvant organique.

L'ammoniac gazeux est utilisé avantageusement en un rapport molaire : ammoniac gazeux/au moins un borohydrure supérieur à 1. On préconise vivement l'utilisation d'un excès d'ammoniac. L'ammoniac gazeux est en fait avantageusement utilisé en un rapport molaire supérieur à 5.

Comme indiqué ci-dessus, la réaction (de métathèse) est mise en oeuvre sous balayage d'ammoniac gazeux de façon à l'être en permanence, jusqu'à son terme, sous atmosphère d'ammoniac gazeux (et ce, sans intervention, au départ, d'ammoniac gazeux en surpression).

Avantageusement, pour la synthèse, le au moins un sel d'ammonium est utilisé en excès (par rapport à la stoechiométrie). Il est en effet avantageux d'épuiser le au moins un borohydrure mis à réagir avec ledit au moins un sel d'ammonium (la réaction étant mise en oeuvre avec le au moins un sel d'ammonium en excès et menée jusqu'à son terme (i.e. jusqu'à épuisement du au moins un borohydrure)), dans la mesure où il est évidemment avantageux, à l'issue de la réaction, de récupérer le borazane synthétisé le plus sélectivement possible (et avec un rendement le plus élevé possible). Il est en effet plus facile de séparer du borazane synthétisé (co-liquéfié) d'un reliquat de sel d'ammonium et du(des) co-produit(s) de la réaction (solides) que du borazane synthétisé (co-liquéfié) d'un reliquat de borohydrure (co-liquéfié). On comprend aisément que l'excès en cause (du au moins un sel d'ammonium par rapport à la stoechiométrie) n'a nul besoin d'être important dans la mesure où (il n'intervient que pour assurer une consommation la plus complète possible du au moins un borohydrure présent et où) il doit être éliminé par la suite. Un faible excès est avantageusement préconisé. On peut indiquer, de façon non limitative, que l'excès (le faible excès) en cause est avantageusement inférieur à 1 %.

Comme indiqué ci-dessus, l'ammoniac gazeux, aux fins de co-liquéfaction avec le au moins un borohydrure, peut être mis au contact dudit au moins un borohydrure avant (variante B) ou après (variante A) le mélange de celui-ci avec le au moins un sel d'ammonium.

Selon une variante (variante A ci-dessus), le procédé de l'invention comprend donc (pour la synthèse du borazane) :
- la constitution d'un mélange d'au moins un sel d'ammonium avec au moins un borohydrure (borohydrure tel que précisé ci-dessus) (généralement d'un sel d'ammonium avec un tel borohydrure) ;
- la mise en oeuvre d'un balayage d'ammoniac gazeux pour mise en contact dudit mélange avec de l'ammoniac gazeux ; de l'ammoniac gazeux étant alors co-liquéfié avec ledit au moins un borohydrure ; et
- la réaction dudit au moins un borohydrure co-liquéfié et dudit au moins un sel d'ammonium sous atmosphère d'ammoniac gazeux ; le borazane synthétisé étant co-liquéfié avec de l'ammoniac gazeux au fur et à mesure de sa synthèse.

Selon une autre variante (variante B ci-dessus), le procédé de l'invention comprend donc (pour la synthèse du borazane) :
- la mise en oeuvre d'un balayage d'ammoniac gazeux pour mise en contact d'au moins un borohydrure (borohydrure tel que précisé ci-dessus) (généralement d'un borohydrure) avec de l'ammoniac gazeux ; de l'ammoniac gazeux étant co-liquéfié avec ledit au moins un borohydrure ;
- l'addition, audit au moins un borohydrure co-liquéfié avec de l'ammoniac gazeux, d'au moins un sel d'ammonium (généralement d'un sel d'ammonium) ; et
- la réaction dudit au moins un borohydrure co-liquéfié et dudit au moins un sel d'ammonium, sous atmosphère d'ammoniac gazeux ; le borazane synthétisé étant co-liquéfié avec de l'ammoniac gazeux au fur et à mesure de sa synthèse.

La variante A est préférée dans la mesure où la constitution préalable du mélange des réactifs solides est opportune pour la conduite de la réaction (de métathèse).

En référence à la nature des réactifs en cause, on peut préciser ce qui suit. Le au moins un sel d'ammonium est généralement choisi parmi le carbonate d'ammonium, le bicarbonate d'ammonium, le sulfate d'ammonium, le chlorure d'ammonium, le fluorure d'ammonium, le nitrate d'ammonium, l'acétate d'ammonium, le formiate d'ammonium, et consiste avantageusement en le carbonate d'ammonium ; et/ou, de préférence et, ledit au moins un borohydrure est généralement choisi parmi le borohydrure de sodium, le borohydrure de lithium et le borohydrure de potassium et consiste avantageusement en le borohydrure de sodium.

Selon une variante avantageuse, le procédé de l'invention comprend donc la réaction (de métathèse) entre ledit carbonate d'ammonium et ledit borohydrure de sodium co-liquéfié avec de l'ammoniac gazeux.

Les réactifs utilisés pour la mise en oeuvre de la métathèse le sont avantageusement, de manière conventionnelle, à l'état de poudres. Ainsi, selon la variante A précisée ci-dessus, on réalise un mélange pulvérulent d'au moins un sel d'ammonium avec au moins un borohydrure et l'ammoniac gazeux est mis au contact de ce mélange pulvérulent (par balayage) pour la co-liquéfaction borohydrure(s)/ammoniac gazeux.

On a vu ci-dessus que le borazane synthétisé est, au fur et à mesure de sa synthèse, co-liquéfié avec de l'ammoniac gazeux ; et
qu'au fur et à mesure de l'avancement de la synthèse, la phase liquide du milieu s'appauvrit en borohydrure(s) co-liquéfié(s) et s'enrichit en borazane synthétisé (également co-liquéfié) tandis que la phase solide dudit milieu réactionnel s'appauvrit en sel(s) d'ammonium et s'enrichit donc en le(s) co-produit(s) de la réaction.

On en vient maintenant à la récupération du borazane synthétisé, ledit borazane synthétisé se trouvant, dans le cadre de la mise en oeuvre du procédé de l'invention, co-liquéfié avec de l'ammoniac liquide.

La récupération du borazane synthétisé, à partir du milieu réactionnel (renfermant principalement ledit borazane synthétisé et le(s) co-produit(s) (synthétisé(s) en parallèle), susceptible de renfermer en outre un reliquat du au moins un sel d'ammonium (réactif(s)) et/ou un reliquat du au moins un borohydrure (autre réactif(s)), des impuretés contenues dans les réactifs et des impuretés résultant de réactions parasites) est une opération qu'il convient de mener très avantageusement sur un milieu réactionnel ne renfermant plus de borohydrure(s) (en tout état de cause susceptible de n'en renfermer qu'un minimum). L'homme du métier comprend que le borazane récupéré est avantageusement récupéré le plus pur possible et conçoit la difficulté à séparer ledit borazane synthétisé d'un quelconque borohydrure. On privilégie donc fortement la mise en oeuvre de la synthèse du borazane selon l'invention (métathèse sous balayage d'ammoniac gazeux) dans des conditions qui minimisent, au final, la présence de borohydrure(s), i.e. on privilégie de mettre en oeuvre la réaction jusqu'à son terme et avec, au départ, un excès (avantageusement un léger excès) du au moins un sel d'ammonium par rapport à la stoechiométrie. L'épuisement du milieu réactionnel en borohydrure(s) peut être suivi par analyse de prélèvements, notamment par RMN ¹H.

Dans ces conditions, pour la récupération du borazane synthétisé, on peut, selon une première variante, opérer directement sur le milieu réactionnel. Ainsi, à l'issue de la synthèse (= aux termes de celle-ci ; toute alimentation en ammoniac gazeux étant évidemment stoppée (i.e. le balayage en ammoniac gazeux étant stoppé)), démarrée avec un excès du au moins un sel d'ammonium, 1) on élimine l'ammoniac (tout d'abord celui présent dans le ciel gazeux, puis celui présent dans la phase liquide (qui transite par le ciel)) (par évaporation, avantageusement par évaporation sous vide, en référence à la cinétique) ; ladite élimination de l'ammoniac provoquant la précipitation d'une phase solide renfermant le borazane synthétisé (avec principalement le(s) co-produit(s) synthétisé(s) en parallèle (et également le reliquat du au moins un sel d'ammonium utilisé en excès mais *a priori* sans borohydrure(s)) ; 2) on dissout sélectivement ledit borazane synthétisé précipité de ladite phase solide générée dans un solvant et 3) on récupère ledit borazane synthétisé dissous (sélectivement) en éliminant ledit solvant (par évaporation sous vide). La dissolution sélective requiert un solvant du borazane, non solvant du(des) co-produit(s) de la synthèse (on a compris que le co-produit est du carbonate de sodium lorsque le borohydrure de sodium et le carbonate d'ammonium sont utilisés comme réactifs et que des co-produits sont, de manière générale, générés lorsqu'au moins deux sels d'ammonium et/ou au moins deux borohydrures sont utilisés comme réactifs) et du reliquat du au moins un sel d'ammonium. Un tel solvant peut notamment consister en le tétrahydrofurane, le 2-méthyltétrahydrofurane, le dioxane, l'acétonitrile, l'acétate d'éthyle, l'acétate d'isopropyle, le carbonate de diméthyl ou un de leurs mélanges.

Dans les conditions (rappelées ci-dessus : réaction terminée (toute alimentation en ammoniac gazeux étant évidemment stoppée (i.e. le balayage en ammoniac gazeux étant stoppé) et démarrée avec un excès du au moins un sel d'ammonium), pour la récupération du borazane synthéthisé, on peut, selon une deuxième variante, procéder comme suit : 1) on filtre le milieu réactionnel pour en éliminer les solides (principalement le(les) co-produit(s) de la synthèse et le reliquat du au moins un sel d'ammonium utilisé en excès) ; et 2) on élimine l'ammoniac (par évaporation, avantageusement par évaporation sous vide, en référence à la cinétique) ; ladite élimination de l'ammoniac provoquant la précipitation d'une phase solide constituée quasi exclusivement (voire exclusivement) du borazane synthétisé (en l'absence, *a priori* de tout reliquat de borohydrure(s)).

Il est ainsi possible de récupérer le (maximum de) borazane synthétisé ; ledit borazane synthétisé récupéré présentant un degré de pureté très intéressant.

Il est bien évidemment possible, dans le cadre de la présente invention, de mettre en oeuvre la synthèse du borazane et la récupération de celui-ci dans des conditions moins avantageuses (synthèse sans excès du au moins un sel d'ammonium et/ou non menée à son terme, de sorte que le borazane doit être récupéré à partir d'un milieu le renfermant et renfermant également le au moins un borohydrure n'ayant pas réagi (en quantité « significative »)). Les procédés de récupération du borazane précisés ci-dessus peuvent opportunément être mis en oeuvre mais on comprend qu'ils conduisent à une récupération conjointe dudit borazane synthétisé et du au moins un borohydrure n'ayant pas réagi (en quantité « significative »). Il est alors nécessaire, pour l'obtention d'un borazane « pur », de mettre en oeuvre une étape supplémentaire de séparation borazane/borohydrure(s). Des méthodes appropriées, généralement toutefois difficilement industrialisables, existent (sublimation, par exemple). En tout état de cause, une étape supplémentaire doit être mise en oeuvre. On comprend que sont donc vivement préconisée la mise en oeuvre de la synthèse du borazane dans les conditions avantageuses précisées ci-dessus (avec excès (de préférence léger excès) du au moins un sel d'ammonium et jusqu'à épuisement du au moins un borohydrure (jusqu'à son terme)).

Selon une variante particulièrement préférée, le procédé de l'invention comprend :
- la constitution d'un mélange pulvérulent d'au moins un sel d'ammonium avec au moins un borohydrure (de type adéquat, voir ci-dessus)) ; le au moins un sel d'ammonium étant utilisé en léger excès (moins de 1 %), par rapport à la stoechiométrie ;
- la mise en oeuvre d'un balayage d'ammoniac gazeux pour mise en contact dudit mélange avec de l'ammoniac gazeux ; puis, à l'issue de la réaction,
- l'arrêt du balayage d'ammoniac gazeux,
- l'élimination de l'ammoniac, de préférence par évaporation sous vide ; ladite élimination de l'ammoniac générant une phase solide renfermant le borazane synthétisé ; et
- la dissolution sélective dudit borazane synthétisé dans un solvant puis l'élimination dudit solvant, par évaporation sous vide, pour la récupération dudit borazane synthétisé.

On se propose ci-après d'illustrer l'invention par un exemple. A la considération dudit exemple, le grand intérêt du procédé de l'invention est confirmé.

### Exemple

La réaction de métathèse a été mise en oeuvre dans un ballon tricol (d'un volume de 100 mL), équipé de moyens d'agitation.

On a introduit dans ledit ballon tricol :
- 2,3 g de borohydrure de sodium (NaBH₄), et
- 2,9 g de carbonate d'ammonium ((NH₄)₂CO₃),
à l'état de poudres (ledit carbonate d'ammonium a ainsi été introduit en léger excès par rapport à la stoechiométrie).

Un bain de glace a été mis en place sous ledit ballon tricol pour assurer une température de 0°C dans le volume dudit ballon tricol.

Un flux d'ammoniac gazeux (environ 45 mL/min) a alors été introduit, par l'un des cols du ballon, à pression atmosphérique. L'ammoniac gazeux introduit, non liquéfié, était évacué par un autre des cols du ballon.

Dès l'introduction du flux d'ammoniac gazeux, on a observé, dans le ballon, l'apparition d'un milieu réactionnel hétérogène très chargé en solide. Ledit milieu hétérogène (solide ((NH₄)₂CO₃)/liquide (borohydrure de sodium et ammoniac co-liquéfiés) présentait un volume d'environ 5 mL. La réaction (solide ((NH₄)₂CO₃)/liquide (borohydrure de sodium liquéfié) était mise en oeuvre au sein d'un tel milieu hétérogène (d'aspect blanc mousseux (mousseux du fait de la formation d'hydrogène). On rappelle que les étapes successives de co-liquéfaction et de réaction de métathèse se schématisent comme suit :

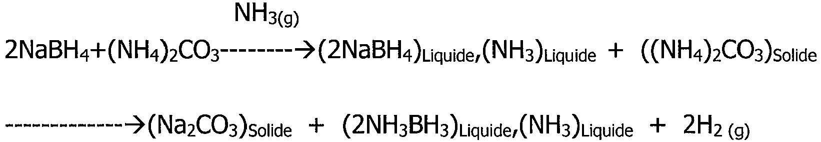

Sous balayage du flux d'ammoniac gazeux et sous agitation, la réaction a été poursuivie pendant 3 h.

A l'issue de ces 3 h (les inventeurs avaient vérifié que le borohydrure de sodium (2,3 g de départ) était alors consommé), l'alimentation en ammoniac gazeux a été stoppée. Le ballon a alors été dégazé sous vide. Son contenu est redevenu solide (poudre).

Le borazane ainsi synthétisé a ensuite été récupéré par dissolution sélective, à partir dudit solide (de ladite poudre).

Du 2-méthyltétrahydrofurane (50 mL) a été introduit, dans ledit ballon, sur le solide. Ledit 2-méthyltétrahydrofurane a assuré une dissolution sélective du borazane ; d'où l'obtention d'une phase solide dispersée dans une phase liquide renfermant ledit borazane dissous dans ledit 2-méthyltétrahydrofurane. Cette phase solide - constituée essentiellement du produit obtenu conjointement au borazane (co-produit : Na₂CO₃) et de l'excès de (NH₄)₂CO₃, majoritairement dudit produit obtenu conjointement au borazane (co-produit : Na₂CO₃) - a été éliminée par filtration.

Le borazane synthétisé, dissous dans le 2-méthyltétrahydrofurane a alors été récupéré par évaporation dudit 2-méthyltétrahydrofurane (évaporation mise en oeuvre à 30°C, sous 100 mbar pendant 1 h).

On a ainsi récupéré 1,3 g de borazane (NH₃BH₃). Ceci correspond à un rendement de synthèse de 70 % et à une productivité de synthèse proche de 260 g de NH₃BH₃/L de milieu réactionnel (on a assimilé ici le volume du milieu réactionnel (d'environ 5 mL (voir ci-dessus), comprenant 2,3 g de NaBH₄, 2,9 g de (NH₄)₂CO₃ et le NH₃ liquéfié (8,1 L)) au volume de solvant (voir la définition ci-dessus de la productivité de synthèse). La valeur indiquée de 260 g/L (1,3/5 x 10³) est donc en fait minorée). Sachant que pour une réaction de métathèse mise en oeuvre « conventionnellement » par la Demanderesse (à l'échelle pilote) en solvant organique (2-méthyltétrahydrofurane), la productivité de synthèse n'est que de l'ordre de 26 g de NH₃BH₃/L de solvant (1,13 kg de NH₃BH₃ sont obtenus avec 44 L de solvant (une telle quantité de solvant étant nécessaire pour dissoudre sélectivement le borazane synthétisé (le co-produit obtenu (Na₂CO₃) restant insoluble)), on comprend l'intérêt de la synthèse selon l'invention (mise en oeuvre sous ammoniac gazeux, sans solvant, dans des conditions de température et pression « douces »).

Le borazane, synthétisé selon l'invention, présentait par ailleurs un degré de pureté intéressant. En effet, la présence d'impuretés à des taux détectables n'a été mise en évidence ni par RMN ¹H (une masse donnée du borazane synthétisé a été dissoute dans un solvant (THF) ; du benzène étant ajouté dans la solution analysée comme étalon), ni par infra-rouge, i.e. que toute impureté potentiellement présente ne l'était qu'à un taux inférieur à 1 % en masse (en fait, d'après la technique infra-rouge, toute impureté potentiellement présente ne l'était qu'à un taux très inférieur à 1 % en masse).

## Revendications

1. Procédé d'obtention du borazane, comprenant la synthèse dudit borazane par réaction d'au moins un sel d'ammonium avec au moins un borohydrure, ledit au moins un borohydrure étant choisi parmi les borohydrures de métal alcalin et les borohydrures de métal alcalino-terreux, **caractérisé en ce que** ladite réaction est mise en oeuvre sous balayage d'ammoniac gazeux ; de l'ammoniac gazeux étant co-liquéfié avec ledit au moins un borohydrure et, au fur et à mesure de sa synthèse, avec le borazane.

2. Procédé selon la revendication 1, **caractérisé en ce que** ladite réaction est mise en oeuvre à une pression comprise entre 1. 10⁵ et 2. 10⁵ Pa (1 et 2 atm), avantageusement à la pression atmosphérique, et à une température comprise entre -5°C et 25°C.

3. Procédé selon la revendication 1 ou 2, **caractérisé en ce que** ladite réaction est mise en oeuvre en l'absence de solvant organique.

4. Procédé selon l'une quelconque des revendications 1 à 3, **caractérisé en ce que** l'ammoniac gazeux est utilisé en un rapport molaire : ammoniac gazeux/au moins un borohydrure supérieur à 1, avantageusement supérieur à 5.

5. Procédé selon l'une quelconque des revendications 1 à 4, **caractérisé en ce que** le au moins un sel d'ammonium est utilisé en excès, avantageusement en léger excès, par rapport à la stoechiométrie.

6. Procédé selon l'une quelconque des revendications 1 à 5, **caractérisé en ce qu'**il comprend :
- la constitution d'un mélange dudit au moins un sel d'ammonium avec ledit au moins un borohydrure ;
- la mise en oeuvre d'un balayage d'ammoniac gazeux pour mise en contact dudit mélange avec de l'ammoniac gazeux ; de l'ammoniac gazeux étant alors co-liquéfié avec ledit au moins un borohydrure ; et
- la réaction dudit au moins un borohydrure co-liquéfié et dudit au moins un sel d'ammonium sous balayage d'ammoniac gazeux ; le borazane synthétisé étant co-liquéfié avec de l'ammoniac gazeux au fur et à mesure de sa synthèse.

7. Procédé selon l'une quelconque des revendications 1 à 5, **caractérisé en ce qu'**il comprend :
- la mise en oeuvre d'un balayage d'ammoniac gazeux pour mise en contact dudit au moins un borohydrure avec de l'ammoniac gazeux ; de l'ammoniac gazeux étant co-liquéfié avec ledit au moins un borohydrure ;
- l'addition, audit au moins un borohydrure co-liquéfié avec de l'ammoniac gazeux, dudit au moins un sel d'ammonium ; et
- la réaction dudit au moins un borohydrure co-liquéfié et dudit au moins un sel d'ammonium, sous balayage d'ammoniac gazeux ; le borazane synthétisé étant co-liquéfié avec de l'ammoniac gazeux au fur et à mesure de sa synthèse.

8. Procédé selon l'une quelconque des revendications 1 à 7, **caractérisé en ce que** ledit au moins un sel d'ammonium est choisi parmi le carbonate d'ammonium, le bicarbonate d'ammonium, le sulfate d'ammonium, le chlorure d'ammonium, le fluorure d'ammonium, le nitrate d'ammonium, l'acétate d'ammonium, le formiate d'ammonium, et consiste avantageusement en le carbonate d'ammonium ; et/ou, de préférence et, **en ce que** ledit au moins un borohydrure est choisi parmi le borohydrure de sodium, le borohydrure de lithium et le borohydrure de potassium et consiste avantageusement en le borohydrure de sodium.

9. Procédé selon l'une quelconque des revendications 6 à 8, **caractérisé en ce qu'**il comprend en outre, à l'issue de la réaction :
- l'arrêt du balayage d'ammoniac gazeux ;
- l'élimination de l'ammoniac, de préférence par évaporation sous vide ; ladite élimination de l'ammoniac provoquant la précipitation d'une phase solide renfermant le borazane synthétisé ; et
- la dissolution sélective dudit borazane synthétisé dans un solvant puis l'élimination, par évaporation sous vide, dudit solvant pour la récupération dudit borazane synthétisé.

10. Procédé selon la revendication 9, **caractérisé en ce que** ledit solvant est choisi parmi le tétrahydrofurane, le 2-méthyltétrahydrofurane, le dioxane, l'acétonitrile, l'acétate d'éthyle, l'acétate d'isopropyle, le carbonate de diméthyl et un de leurs mélanges.

11. Procédé selon l'une quelconque des revendications 6 à 8, **caractérisé en ce qu'**il comprend en outre, à l'issue de la réaction :
- l'arrêt du balayage d'ammoniac gazeux ;
- la filtration du milieu réactionnel pour l'élimination des solides ;
- l'élimination de l'ammoniac, de préférence par évaporation sous vide ; ladite élimination de l'ammoniac provoquant la précipitation d'une phase solide constituée quasi exclusivement dudit borazane synthétisé.

12. Procédé selon l'une quelconque des revendications 1 à 11, **caractérisé en ce qu'**il comprend :
- la constitution d'un mélange pulvérulent dudit au moins un sel d'ammonium avec ledit au moins un borohydrure ; le au moins un sel d'ammonium étant utilisé en léger excès, par rapport à la stoechiométrie ;
- la mise en oeuvre d'un balayage d'ammoniac gazeux pour mise en contact dudit mélange avec de l'ammoniac gazeux ; puis, à l'issue de la réaction,
- l'arrêt du balayage d'ammoniac gazeux ;
- l'élimination de l'ammoniac, de préférence par évaporation sous vide ; ladite élimination de l'ammoniac générant une phase solide renfermant le borazane synthétisé ; et
- la dissolution sélective dudit borazane synthétisé dans un solvant puis l'élimination, par évaporation sous vide, dudit solvant pour la récupération dudit borazane synthétisé.

## Patentansprüche

1. Verfahren zum Erhalten von Borazan, umfassend die Synthese des Borazans durch eine Reaktion von mindestens einem Ammoniumsalz mit mindestens einem Borhydrid, wobei das mindestens eine Borhydrid ausgewählt ist aus den Borhydriden eines Alkalimetalls und den Borhydriden eines Erdalkalimetalls, **dadurch gekennzeichnet, dass** die Reaktion unter Spülung von gasförmigem Ammoniak umgesetzt wird, wobei das gasförmige Ammoniak mit dem mindestens einen Borhydrid und nach und nach bei seiner Synthese mit dem Borazan gemeinsam verflüssigt wird.

2. Verfahren nach Anspruch 1, **dadurch gekennzeichnet, dass** die Reaktion bei einem Druck zwischen 1. 10⁵ und 2. 10⁵ Pa (1 und 2 atm), vorteilhafterweise bei Atmosphärendruck, und bei einer Temperatur zwischen -5 °C und 25 °C umgesetzt wird.

3. Verfahren nach Anspruch 1 oder 2, **dadurch gekennzeichnet, dass** die Reaktion in Abwesenheit eines organischen Lösungsmittels umgesetzt wird.

4. Verfahren nach einem der Ansprüche 1 bis 3, **dadurch gekennzeichnet, dass** das gasförmige Ammoniak in einem Molverhältnis verwendet wird: gasförmiges Ammoniak/mindestens ein Borhydrid größer als 1, vorteilhafterweise größer als 5.

5. Verfahren nach einem der Ansprüche 1 bis 4, **dadurch gekennzeichnet, dass** das mindestens eine Ammoniumsalz in Bezug auf die Stöchiometrie im Überschuss, vorteilhafterweise mit einem leichten Überschuss, verwendet wird.

6. Verfahren nach einem der Ansprüche 1 bis 5, **dadurch gekennzeichnet, dass** es umfasst:
- Bildung eines Gemischs des mindestens einen Ammoniumsalzes mit dem mindestens einen Borhydrid,
- Umsetzung einer Spülung von gasförmigem Ammoniak zum In-Kontakt-Bringen des Gemischs mit dem gasförmigen Ammoniak, wobei das gasförmige Ammoniak dann mit dem mindestens einen Borhydrid gemeinsam verflüssigt ist, und
- Reaktion des mindestens einen gemeinsam verflüssigten Borhydrids und des mindestens einen Ammoniumsalzes unter Spülung von gasförmigem Ammoniak, wobei das synthetisierte Borazan nach und nach bei seiner Synthese mit dem gasförmigen Ammoniak gemeinsam verflüssigt wird.

7. Verfahren nach einem der Ansprüche 1 bis 5, **dadurch gekennzeichnet, dass** es umfasst:
- Umsetzung einer Spülung von gasförmigem Ammoniak zum In-Kontakt-Bringen des mindestens einen Borhydrids mit dem gasförmigen Ammoniak, wobei das gasförmige Ammoniak mit dem mindestens einen Borhydrid gemeinsam verflüssigt ist,
- Zugabe des mindestens einen Ammoniumsalzes zu dem mindestens einen mit dem gasförmigen Ammoniak gemeinsam verflüssigten Borhydrid, und
- Reaktion des mindestens einen gemeinsam verflüssigten Borhydrids und des mindestens einen Ammoniumsalzes unter Spülung von gasförmigem Ammoniak, wobei das synthetisierte Borazan nach und nach bei seiner Synthese mit dem gasförmigen Ammoniak gemeinsam verflüssigt wird.

8. Verfahren nach einem der Ansprüche 1 bis 7, **dadurch gekennzeichnet, dass** das mindestens eine Ammoniumsalz aus Ammoniumcarbonat, Ammoniumbicarbonat, Ammoniumsulfat, Ammoniumchlorid, Ammoniumfluorid, Ammoniumnitrat, Ammoniumacetat, Ammoniumformiat ausgewählt ist und vorteilhafterweise aus Ammoniumcarbonat besteht, und/oder vorzugsweise und dadurch, dass das mindestens eine Borhydrid aus Natriumborhydrid, Lithiumborhydrid und Kaliumborhydrid ausgewählt ist und vorteilhafterweise aus Natriumborhydrid besteht.

9. Verfahren nach einem der Ansprüche 6 bis 8, **dadurch gekennzeichnet, dass** es ferner nach der Reaktion umfasst:
- Stoppen der Spülung von gasförmigem Ammoniak,
- Eliminierung des Ammoniaks, vorzugsweise durch eine Verdampfung im Vakuum, wobei die Eliminierung des Ammoniaks die Ausfällung einer festen Phase verursacht, in der das synthetisierte Borazan enthalten ist, und
- selektive Auflösung des synthetisierten Borazans in einem Lösungsmittel und anschließend Eliminierung des Lösungsmittels für die Rückgewinnung des synthetisierten Borazans durch eine Verdampfung im Vakuum.

10. Verfahren nach Anspruch 9, **dadurch gekennzeichnet, dass** das Lösungsmittel aus Tetrahydrofuran, 2-Methyltetrahydrofuran, Dioxan, Acetonitril, Ethylacetat, Isopropylacetat, Dimethylcarbonat und einem ihrer Gemische ausgewählt ist.

11. Verfahren nach einem der Ansprüche 6 bis 8, **dadurch gekennzeichnet, dass** es ferner nach der Reaktion umfasst:
- Stoppen der Spülung von gasförmigem Ammoniak,
- Filtration des Reaktionsmediums für die Eliminierung der Feststoffe,
- Eliminierung des Ammoniaks, vorzugsweise durch eine Verdampfung im Vakuum, wobei die Eliminierung des Ammoniaks die Ausfällung einer festen Phase verursacht, die fast ausschließlich durch das synthetisierte Borazan gebildet wird.

12. Verfahren nach einem der Ansprüche 1 bis 11, **dadurch gekennzeichnet, dass** es umfasst:
- Bildung eines pulverförmigen Gemischs des mindestens einen Ammoniumsalzes mit dem mindestens einen Borhydrid, wobei das mindestens eine Ammoniumsalz in Bezug auf die Stöchiometrie mit einem leichten Überschuss verwendet wird,
- Umsetzung einer Spülung von gasförmigem Ammoniak zum In-Kontakt-Bringen des Gemischs mit dem gasförmigen Ammoniak, dann nach der Reaktion,
- Stoppen der Spülung von gasförmigem Ammoniak,
- Eliminierung des Ammoniaks, vorzugsweise durch eine Verdampfung im Vakuum, wobei die Eliminierung des Ammoniaks eine feste Phase erzeugt, in der das synthetisierte Borazan enthalten ist, und
- selektive Auflösung des synthetisierten Borazans in einem Lösungsmittel und anschließend Eliminierung des Lösungsmittels für die Rückgewinnung des synthetisierten Borazans durch eine Verdampfung im Vakuum.

## Claims

1. A method for producing borazane, comprising the synthesis of said borazane by reaction of at least one ammonium salt with at least one borohydride, said at least one borohydride being chosen from alkali metal borohydrides and alkaline-earth metal borohydrides, **characterized in that** said reaction is performed while flushing with gaseous ammonia; gaseous ammonia being co-liquefied with said at least one borohydride and gradually with borazane as it is synthesized.

2. The method as claimed in claim 1, **characterized in that** said reaction is performed at a pressure of between 1 x 10⁵ and 2 x 10⁵ Pa (1 and 2 atm), advantageously at atmospheric pressure, and at a temperature of between -5°C and 25°C.

3. The method as claimed in claim 1 or 2, **characterized in that** said reaction is performed in the absence of organic solvent.

4. The method as claimed in any one of claims 1 to 3, **characterized in that** the gaseous ammonia is used in a gaseous ammonia/at least one borohydride mole ratio of greater than 1, advantageously greater than 5.

5. The method as claimed in any one of claims 1 to 4, **characterized in that** the at least one ammonium salt is used in excess, advantageously in slight excess, relative to the stoichiometry.

6. The method as claimed in any one of claims 1 to 5, **characterized in that** it comprises:
- making a mixture of said at least one ammonium salt with said at least one borohydride;
- flushing with gaseous ammonia to bring said mixture into contact with gaseous ammonia; gaseous ammonia then being co-liquefied with said at least one borohydride; and
- reacting said at least one co-liquefied borohydride and said at least one ammonium salt while flushing with gaseous ammonia; the synthesized borazane being co-liquefied with gaseous ammonia gradually as it is synthesized.

7. The method as claimed in any one of claims 1 to 5, **characterized in that** it comprises:
- flushing with gaseous ammonia to bring said at least one borohydride into contact with gaseous ammonia; gaseous ammonia being co-liquefied with said at least one borohydride;
- adding, to said at least one borohydride co-liquefied with gaseous ammonia, said at least one ammonium salt; and
- reacting said at least one co-liquefied borohydride and said at least one ammonium salt, while flushing with gaseous ammonia; the synthesized borazane being co-liquefied with gaseous ammonia gradually as it is synthesized.

8. The method as claimed in any one of claims 1 to 7, **characterized in that** said at least one ammonium salt is selected from ammonium carbonate, ammonium bicarbonate, ammonium sulfate, ammonium chloride, ammonium fluoride, ammonium nitrate, ammonium acetate and ammonium formate, and advantageously consists of ammonium carbonate; and/or, preferably and, **in that** said at least one borohydride is chosen from sodium borohydride, lithium borohydride and potassium borohydride and advantageously consists of sodium borohydride.

9. The method as claimed in any one of claims 6 to 8, **characterized in that** it also comprises, on conclusion of the reaction:
- stopping the flushing with gaseous ammonia;
- removing the ammonia, preferably by evaporation under vacuum; the ammonia removal causing the precipitation of a solid phase containing the synthesized borazane; and
- selectively dissolving said synthesized borazane in a solvent and then removing, by evaporation under vacuum, said solvent for recovery of said synthesized borazane.

10. The method as claimed in claim 9, **characterized in that** said solvent is selected from tetrahydrofuran, 2-methyltetrahydrofuran, dioxane, acetonitrile, ethyl acetate, isopropyl acetate and dimethyl carbonate, and a mixture thereof.

11. The method as claimed in any one of claims 6 to 8, **characterized in that** it also comprises, on conclusion of the reaction:
- stopping the flushing with gaseous ammonia;
- filtering the reaction medium to remove the solids;
- removing the ammonia, preferably by evaporation under vacuum; the ammonia removal causing the precipitation of a solid phase constituted virtually exclusively of said synthesized borazane.

12. The method as claimed in any one of claims 1 to 11, **characterized in that** it comprises:
- making a pulverulent mixture of said at least one ammonium salt with said at least one borohydride; the at least one ammonium salt being used in slight excess, relative to the stoichiometry;
- flushing with gaseous ammonia to bring said mixture into contact with gaseous ammonia; and then, on conclusion of the reaction,
- stopping the flushing with gaseous ammonia;
- removing the ammonia, preferably by evaporation under vacuum; said ammonia removal generating a solid phase containing the synthesized borazane; and
- selectively dissolving said synthesized borazane in a solvent and then removing, by evaporation under vacuum, said solvent for the recovery of said synthesized borazane.
